# EUROPEAN PATENT SPECIFICATION

(11) **EP 2 946 374 B1**
(45) Date of publication and mention of the grant of the patent: **30.09.2020**
(21) Application number: 14701594.5
(22) Date of filing: 14.01.2014
(51) Int. Cl.: G08G 1/16, B60Q 1/38, B60Q 1/52, B60Q 5/00, B60Q 9/00

(54) **CYCLIST WARNING SYSTEM**
WARNSYSTEM FÜR RADFAHRER
SYSTÈME D'AVERTISSEMENT DE CYCLISTE

(30) Priority: 15.01.2013 GB 201300651
(43) Date of publication of application: 25.11.2015
(73) Proprietor: Innovative Safety Systems Limited, Coventry, West Midlands CV3 2RL (GB)
(72) Inventor: THODAY, Gavin Robert, Coventry West Midlands CV3 2RL (GB); MAISEY, Paul, Castle Vale Birmingham B35 6LJ (GB)
(74) Representative: Range, Christopher William
(86) International application number: PCT/GB2014/050093
(87) International publication number: WO 2014/111700

(56) References cited:
- EP-A1- 2 506 234
- AT-U1- 9 329
- DE-A1- 3 840 464
- DE-A1-102005 037 710
- GB-A- 2 265 744
- US-A1- 2005 275 514
- US-A1- 2012 185 130
- US-B1- 6 894 608
- US-B2- 6 753 766

## Description

This invention relates to a cyclist warning system, in particular a warning system for the nearside of heavy goods vehicles such as trucks and buses.

Cyclists are frequently injured or killed by a vehicle turning to the nearside, that is to say the pavement side. Typically a cyclist is on the nearside of a vehicle when travelling across a road junction, and is hit by the vehicle as it turns to the nearside. The reasons for such collisions are many and various, and include inattention by the cyclist and/or the vehicle driver, failure by the vehicle driver to indicate a turn, a broken or malfunctioning vehicle indicator, and the vehicle rear view mirror(s) having a blind spot in which the cyclist is situated.

AT 9329U1, the closest prior art, discloses an additional warning system for mounting to the nearside of a vehicle to warn cyclists, moped riders and pedestrians before the upcoming nearside turn of the vehicle.

GB 2265744 discloses a motor vehicle blind-spot indicator and warning system.

DE 102005037710 discloses a warning device linked to the turn indicator to provide additional illumination.

DE 3840464 discloses automatically altering the brightness of a vehicle warning light.

US 2012/185130 discloses a vehicle lighting system with signal light control.

US 2005/275514 discloses a blind spot collision detection and warning system for automobiles.

US 6753766 discloses a detecting device for detecting moving target vehicles from a moving host vehicle.

EP 2506234 discloses a vehicle surroundings monitoring device.

It would be desirable to reduce the incidence of such collisions in a simple and inexpensive manner. According to the present invention there is provided a cyclist warning system for the nearside of a heavy goods vehicle (HGV), according to claim 1

In one embodiment the warning device comprises an illuminated sign adapted for attachment to the vehicle. In one embodiment the audible warning is one of speech and a warning sound. The one or more warning devices may provide both a visual and an audible warning, and a single warning device may provide both a visual and an audible warning. Typically an illuminated sign exceeds 100mm in a transverse dimension, and may be circular. In one embodiment a circular warning sign is provided having a diameter of 140mm.

The invention has the advantage of giving additional warning to a cyclist at the nearside of a vehicle of the intention of the driver of the vehicle to turn to the nearside.

An embodiment of the invention includes two or more warning signs for attachment at different longitudinal locations on the vehicle, for example at the front and back of a vehicle load bed, or on the tractor and trailer of an articulated vehicle.

In an embodiment, the warning device comprises an enclosure containing a printed circuit board on which are provided a plurality of light emitting diodes in a warning pattern. In use the light emitting diodes are illuminated on operation of the nearside turn indicator, and in one embodiment the light emitting diodes may flash in any desired manner.

The light emitting diodes may be arranged in a circular pattern with an oblique slash, in the manner of a conventional warning sign, and may further show a somewhat schematic bicycle consisting of frame and wheels. The schematic bicycle may be in a different colour. Furthermore the schematic bicycle may flash within a non-flashing circular pattern of light emitting diodes, or may flash at a different rate from the circular pattern.

The enclosure of the warning sign is preferably hermetically sealed and may include a lens or cover through which the warning is illuminated. The enclosure may include fixings for attachment to a vehicle, and such fixings may be adapted to screws, rivets, tie wraps or any other convenient fixing device. In one embodiment the enclosure comprises a circular moulding of plastics material, such as ABS.

The controller is typically in the form of a box-like casing within which is housed electronic components for providing power and control of the illuminated sign(s). Typically the controller and illuminated sign(s) are connected by a wiring harness, and one harness may be provided for each illuminated sign. The audible warning device of the invention may also be connected to the controller via a wiring harness, and more than one such audible warning device may be provided. The controller is typically arranged for installation on the vehicle dashboard within sight and reach of the vehicle driver.

The controller includes certain inputs, namely a power supply and a control lead connected to a vehicle nearside turn indicator.

The power supply is preferably from the vehicle, and the controller may be arranged to receive a range of voltages, for example 9-32v, so as to be adaptable to a wide range of vehicles. The turn indicator signals may be from a vehicle CAN-BUS or the like, but in one embodiment is a single wire coupled to the nearside output of the turn signal switch.

In one embodiment the controller provides visual and/or audible warning whilst the turn indicator is operating. In another embodiment the controller provides visual and/or audible warning for a pre-determined period after commencement of operation of the turn indicator. The controller may continue to provide visual and/or audible warning for a pre-determined period after operation of the turn indicator has ceased.

As an example only, the system may further include an inhibit for low ambient light conditions. Such an arrangement obviates warnings at night time when warning signals may be both unnecessary and an annoyance. Such an inhibit may stop audible warnings whilst permitting visual warnings.

The ambient light inhibit may be automatic, by virtue of an ambient light sensor, and/or may be associated with a vehicle function such as a lighting switch. Thus an ambient light inhibit may be enabled upon the vehicle driver turning on the vehicle lights. Automatic inhibit may be enabled by an ambient light sensor incorporated within the warning device, and communicating with the controller via the wiring harness thereof. Inhibit associated with a vehicle lighting switch may be by way of a single wire signal from the lighting switch to the controller, and may be associated with side lights or headlights.

Ambient light inhibit may also be effected by means of a time clock, for example via a clock of the controller, or via a clock of the vehicle or CAN-BUS. Such a clock may incorporate a daylight time program to adjust inhibition to suit the variation in sunrise and sunset.

The invention comprises an inhibit associated with a high road speed, for example above 30mph (48kph). The controller may have a further input, for example and not forming part of the invention a single wire input, indicative of vehicle speed or comprising an output triggered by a vehicle speed above or below a pre-determined value. Such an input may be provided via a vehicle CAN-BUS signal, or from road speed sensor, such as that associated with a pulse sensor of a tachograph or of a transmission element.

According to the invention sensing road speed is done by Global Positioning Satellite (GPS) signals. A GPS receiver may be incorporated in the enclosure of the warning device.

The advantage of inhibition according to road speed is that unnecessary warning signals are not produced. It is acknowledged that above a minimum road speed the risk of collision or accident is very low and accordingly inhibition of the invention is appropriate. The road speed at which inhibition occurs may be settable according to any appropriate parameter, such as territory, terrain or location, for example according to geographical GPS data.

The invention may further include a mute function to avoid unnecessary warning signals when not appropriate, for example during normal sleeping hours. Such a mute function may be automatic, and for example derived from a clock signal of the vehicle transmitted to the controller, or from an internal clock of the controller as previously described. Optionally, or additionally, a manual mute function may be provided, for example via a switch on the controller.

In order to avoid a vehicle driver switching on the mute function so as to leave the system permanently muted, the controller may cause the mute to be disabled each time the vehicle ignition is switched on or enabled, or according to a time function. Vehicle ignition may for example be sensed by the presence or absence of power to the controller. Alternatively muting may be disabled each time the vehicle engine is started, thus requiring manual re-enablement by the vehicle driver, if required.

In an enhancement, the warning system may include an alert device for the vehicle driver. The invention has the advantage of giving the driver of a vehicle warning as to the presence of a body which has approached the nearside of the vehicle. This could typically occur at junctions where the vehicle is forced to slow or stop and in slow moving traffic.

Typically the proximity device will be incorporated within the warning device, and the alert device will be incorporated within the controller, so that the system is self-contained. The alert device may for example be a sounder, for example a piezo-sounder.

Many different kinds of proximity device may be suitable, and several such devices may provide signals from which an intelligent output may be derived.

In one example the or each proximity device is a proximity sensor such as an ultrasonic sensor. Such a sensor may use the Doppler effect to help distinguish moving objects from stationary objects, or several such sensors may be combined to determine the relative direction and speed of an object to the nearside of the vehicle, thereby to eliminate objects which are not considered to be cyclists. Suitable programming and logic may be incorporated in the controller, for example in the form of a programmable computer chip and memory, for example to eliminate objects moving at less than a low relative threshold speed, for example less than 0.2 m/sec.

The plurality of proximity devices may be arranged alongside the nearside of the vehicle. The plurality of proximity sensors may be installed on a bar which is then itself fitted to the nearside of the vehicle. Such an arrangement facilitates retro-fitting of the sensors to a vehicle by the simple expedient of screws or rivets.

The proximity device may comprise a heat sensor able to detect heat emitted from a human body, in particular heat emitted at head height. Such a proximity device may be directed at head height of a cyclist, which typically lies within a narrow height band above other heat sources such as vehicle engines and exhaust tail pipes. A heat sensor may be combined with a movement sensor in order to better distinguish a cyclist.

The proximity device may comprise one or more cameras. In one embodiment the camera or cameras are infrared cameras adapted to identify a thermal image. In another embodiment one or more conventional still or video cameras are used to identify a cyclist in conjunction with an image recognition system. Thermal and conventional cameras may be used in combination. Image recognition may for example detect features of a cycle (for example the wheels) in order to distinguish a cyclist from other objects and street furniture.

In a further refinement, outputs from a plurality of infrared and/or conventional cameras may be used to identify relative movement of a cycle with respect to the vehicle, as described above in relation to proximity sensors.

In one embodiment of the invention, the cyclist warning system and the driver warning system are combined.

Other features of the invention will be apparent from the following description of several preferred embodiments shown by way of example in the accompanying drawings, in which:-
Fig. 1 is a schematic representation of a first embodiment of the invention.
Fig. 2 is an elevation of a warning device of the invention.
Fig. 3 is a schematic representation of a second embodiment of the invention.

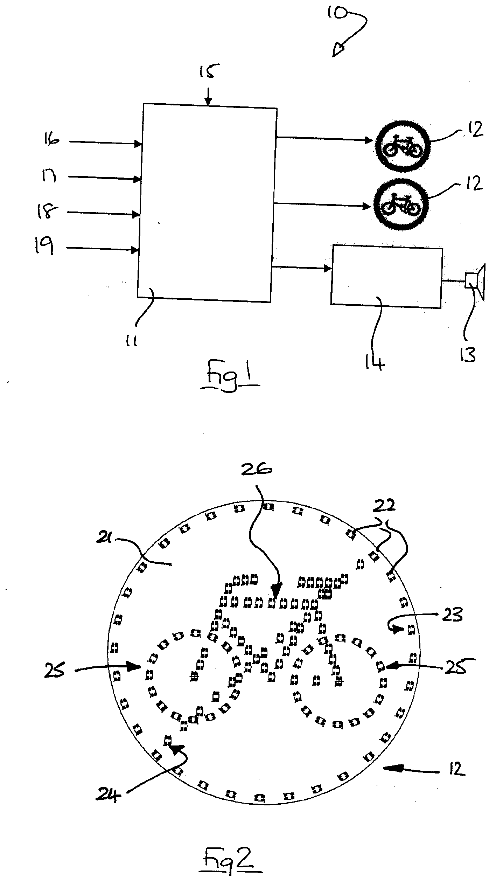

With reference to Fig. 1 a warning system 10 of the invention comprises a controller 11, two visual warning devices 12 and an audible warning device 13 having a sound generator 14. The respective sizes of the elements of Fig. 1 are not representative. Typically the warning devices will be around 140mm in diameter and no more than 25mm thick. The controller may be a small rectangular box having a maximum dimension of 100mm, and the sound generator may be incorporated in the controller 11 or in the audible warning device 13, and may be as small as is practicable to generate the required audible warning. In the alternative the audible warning device 13 may be incorporated in one or both of the visual warning devices 12.

The controller 11 contains electronic circuitry for controlling and operating the warning devices 12,13, and has inputs providing a supply voltage 15, a nearside turn indicator signal 16, a road speed signal 17, an ambient light sensor signal 18 and a mute signal 19. The road speed, ambient light and mute signals are optional, as will be described.

In use the controller is mounted in the vehicle cab in a location convenient for operation by the vehicle driver, and adjacent the input signal sources, in particular the turn indicator switch. Mounting may for example be by adhesive pad or screw fasteners. The controller responds to a nearside turn signal to illuminate the visual warning devices 12, and to sound the audible warning device 13. The warnings may be activated whilst the turn signal is enabled, and/or may be timed.

Fig. 2 illustrates in detail an embodiment of the visual warning device 12, and comprises a substrate 21, typically in the form of a printed circuit board to which is attached an array of individual light emitting diodes 22 which are illuminated in use.

The LEDs, in this embodiment, are connected in several groups, namely the warning element comprising the outer circle 23 and oblique slash 24, the bicycle wheels 25 and the bicycle frame 26 (including handlebar and seat). These three elements are capable of individual operation in any desired sequence. Moreover the individual LEDs of each element may be illuminated successively or intermittently to better attract the attention of a cyclist. For example the wheels of the bicycle may appear to rotate, and the warning element 23,24 may flash.

The LEDs may be of the same colour, or a different colour in order to better attract attention. Typically the LEDs are red, signifying danger. 112 LEDs are illustrated in the example of Fig. 2.

The audible warning device 13 may be programmed to give a warning sound or white noise, or may issue a spoken message such as 'WARNING, THIS VEHICLE IS TURNING'. The sound or message may be pre-programmed in a memory of the controller 11, and a selector may be provided on the controller to permit selection of one of several alternative warnings.

In a refinement the controller 11 may permit uploading or recording of a particular message or sound, for example in the form of an electronic sound file.

The visual warning device 12 is typically incorporated in a hermetically sealed circular housing adapted for attachment to the body or chassis of a vehicle, at a suitable nearside location and rear facing, and typically at a height appropriate to the head of a cyclist so as to be within the normal field of vision. Each device 12 may be operated successively or in unison.

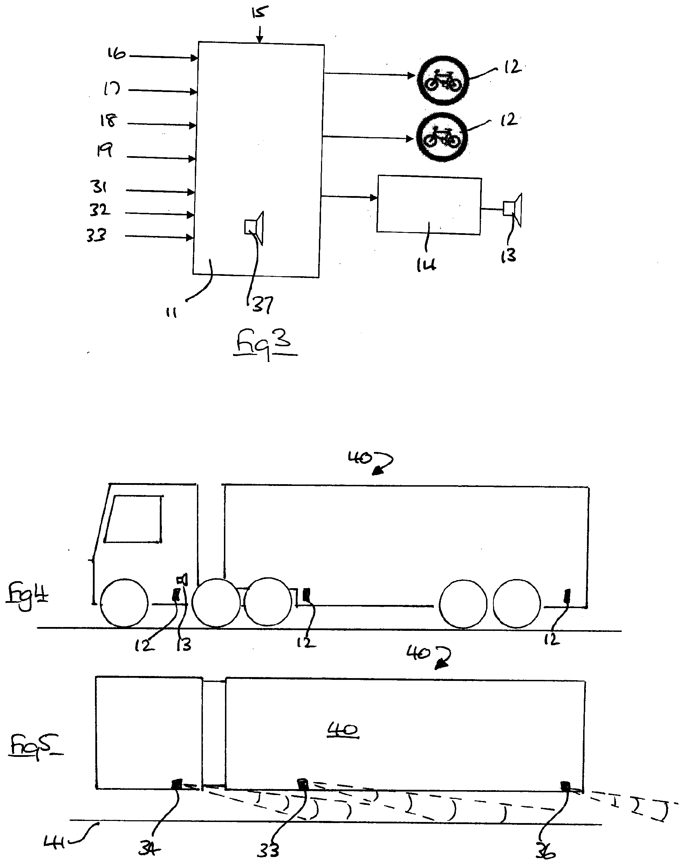

Fig. 3 illustrates a refinement of the invention, in which the controller has additional inputs 31-33 associated with proximity sensors at the vehicle nearside, and a warning device 37 for the vehicle driver, which may be audible and/or visual.

The driver warning system (not shown) not of the present invention comprises a controller 11 arranged in the vehicle cab with the additional inputs 31-33 associated with proximity sensors at the vehicle nearside, like the warning system of Fig. 3. However unlike the invention of Figs. 1-3 the visual warning device 12 and audible warning device 13 having sound generator 14, of the driver warning system are all located in the vehicle cab, since they are provided for the purpose of attracting the attention of the driver.

Thus the warning device may, depending on configuration, be directed to the cyclist, the driver or both.

Figs. 4-5 show schematically an articulated truck 40 adapted to the invention. Locations for visual warning devices 12 and an audible warning device 13 are illustrated, by way of example only. The audible warning device 13 may be incorporated in a visual warning device 12. Three visual warning devices 12 are illustrated in this example.

Each warning device may include an ultrasonic sensor having a narrow spread and range, somewhat similar to a vehicle parking sensor.

Fig. 5 illustrates the truck 40 in plan, with an indication of the projection of each ultrasonic sensor 34-36. Each sensor comprises a transmitter/detector of conventional kind, and recognises objects within the field of view, generally between the truck 40 and a nearside kerb 41.

The sensors 34-36 provide signals to the controller 11, which includes discrimination software for analyzing the inputs 31-33. Such software may use Doppler techniques to recognize a moving cyclist, or may detect relative forward movement of a cyclist by detecting successive inputs form the rearmost sensor 36 to the front most sensor 34. In any event stationary objects, such as street furniture, may be eliminated by having a relative speed threshold of, for example, 0.2m/sec.

The driver warning system relies logic within the controller 11 to interpret the signals received from the sensors 34-36.

The logic looks at the sequence of the signals from the sensors 34-36. This allows the controller 11 to detect relative movement of a cyclist and the truck 40.

A cyclist approaching the near nearside of the truck 40 which has stopped at a junction (for example), has his presence detected sequentially, first by sensor 36, then sensor 33 and then sensor 34 as the cyclist moves alongside the truck 40. In contrast, an item of street furniture will have no relative movement with respect to the stationary truck 40.

In another example, a cyclist approaching the near nearside of the truck 40 which is moving in slow moving traffic, has his presence detected sequentially, first by sensor 36, then sensor 33 and then sensor 34 as the cyclist passes alongside the truck 40.

Items of street furniture will have a relative velocity equal and opposite to the velocity of the truck 40, and therefore will not be erroneously identified as cyclists by the driver's warning system.

A variety of discrimination techniques is possible depending on the orientation and power of each sensor, and the sophistication of the software in the controller 11. Such techniques are within the ability of a suitably skilled person.

In a refinement or alternative, a heat sensor may detect body heat of the cyclist, and is for example aimed at cyclist head height. Upon detection of body heat within a height band of e.g. 1-1.8m, the controller may cause an alarm to sound. A body heat signal may be combined with a movement detector in order to eliminate pedestrians within the range of the detectors, in particular pedestrians who are stationary or walking at less than the relative speed threshold.

In the event that a threat is indicated, a sounder 37 of the controller issues an alarm to the vehicle driver.

Additional sensors may be provided, for example at the front and rear vehicle bumpers.

It is envisaged that the controller will include a selector to permit operation of the warning devices and sensors both individually and together. Thus a driver may choose to activate the sensors 34-36 at all times, or only whilst driving in an urban environment. Such activation may also be automatic, for example by reference to geographical GPS data and for vehicle speed. A GPS sensor may be located in the device so as to provide location and speed information without reference to vehicle systems.

Modifications and alternatives to the invention are envisaged within the scope of the claims appended hereto.

## Claims

1. A cyclist warning system (10) for the nearside of a heavy goods vehicle (HGV) (40) and comprising a controller (11) for a vehicle cab and one or more warning devices (12, 13) responsive to said controller (11) for providing a visual and/or audible warning at the nearside of said vehicle (40), said controller (11) being automatically triggered by operation of a vehicle nearside turn indicator, **characterized in that** said warning system further includes a plurality of proximity sensors (34, 35, 36) arranged along the nearside of the vehicle, for sensing a cycle at the nearside of the vehicle (40), said plurality of proximity sensors (34, 35, 36) communicating with said controller (11), said controller (11) being adapted to discriminate signals (31, 32, 33) from the plurality of proximity sensors (34, 35, 36) to detect movement of a cycle relative to the vehicle (40) to which said sensors (34, 35, 36) are mounted, said discrimination using the relative forward movement of the cycle by detecting successive inputs from a rearmost sensor (36) to a front most sensor (34) of the plurality of proximity sensors (34, 35, 36) and eliminating stationary objects using a relative speed threshold, and wherein the cyclist warning system (10) includes a GPS sensor to provide location and speed information of the heavy goods vehicle (40) and wherein the cyclist warning system (10) further includes an inhibit above a minimum road speed of the vehicle (40), wherein the road speed at which inhibition occurs is settable according to the location information from the GPS sensor.

2. The system (10) of claim 1, wherein said visual and audible warning devices (12, 13) are combined in a common housing.

3. The system (10) of claim 1 or claim 2, wherein the visual warning device (12) is circular and comprises a plurality of LEDs (22) in the shape of a cycle (25, 26), said LEDs (22) being illuminated upon triggering of said controller (11).

4. The system (10) of claim 3, wherein the visual warning device (12) further includes a warning sign comprising a plurality of LEDs (22) in the form of a circle (23) and oblique slash (24) crossing the circle (23).

5. The system (10) of claim 4, wherein the LEDs (22) associated with the warning sign are adapted for illumination independently of the LEDs (22) associated with the cycle (25,26).

6. The system (10) of claim 5, wherein LEDs associated with wheels (25) of the cycle are adapted for illumination independently of the LEDs associated with the frame (26) of the cycle.

7. The system (10) of any preceding claim wherein said controller (11) includes a warning sounder (37) for a vehicle driver.

8. A heavy goods vehicle (40) incorporating the cyclist warning system (10) of any preceding claim.

## Patentansprüche

1. Radfahrerwarnsystem (10) für die Beifahrerseite eines Lastkraftwagens (LKW) (40) und umfassend einen Controller (11) für eine Fahrzeugkabine und eine oder mehrere Warnvorrichtungen (12, 13), welche auf den Controller (11) reagieren um eine optische und/oder akustische Warnung an der Beifahrerseite des Fahrzeugs (40) bereitzustellen, wobei der Controller (11) automatisch durch die Verwendung eines beifahrerseitigen Fahrzeugblinkers ausgelöst wird, **dadurch gekennzeichnet, dass** das Warnsystem weiterhin eine Mehrzahl von Näherungssensoren (34, 35, 36), welche entlang der Beifahrerseite des Fahrzeugs angeordnet sind beinhaltet, um ein Fahrrad an der Beifahrerseite des Fahrzeugs (40) zu erfassen, wobei die Mehrzahl an Näherungssensoren (34, 35, 36) mit dem Controller (11) kommunizieren, wobei der Controller (11) ausgebildet ist um Signale (31, 32, 33) der Mehrzahl an Näherungssensoren (34, 35, 36) zu unterscheiden um Bewegung eines Fahrrads relativ zu dem Fahrzeug (40) an welchem die Sensoren (34, 35, 36) angebracht sind zu erkennen, wobei die Unterscheidung die relative Vorwärtsbewegung des Fahrrads durch Erkennen aufeinanderfolgender Eingangssignale von einem hintersten Sensor (36) zu einem vordersten Sensor (34) der Mehrzahl an Sensoren (34, 35, 36) nutzt und stationäre Objekte unter Verwendung eines Relativgeschwindigkeitsgrenzwertes ausschließt und wobei das Radfahrerwarnsystem (10) einen GPS-Sensor beinhaltet um Orts- und Geschwindigkeitsinformation des Lastkraftwagens (40) bereitzustellen und wobei das Radfahrerwarnsystem (10) weiterhin eine Sperre oberhalb einer minimalen Straßengeschwindigkeit des Fahrzeugs (40) beinhaltet, wobei die Straßengeschwindigkeit, ab welcher die Sperre eintritt, entsprechend der Ortsinformation des GPS-Sensors gesetzt werden kann.

2. System (10) nach Anspruch 1, wobei optische und akustische Warngeräte (12, 13) in einem gemeinsamen Gehäuse zusammengefasst sind.

3. System (10) nach einem der Ansprüche 1 oder 2, wobei das optische Warngerät (12) kreisförmig ist und eine Mehrzahl an LEDs (22) in Form eines Fahrrads (25, 26) beinhaltet, wobei die LEDs (22) durch Auslösen des Controllers (11) erleuchtet werden.

4. System (10) nach Anspruch 3, wobei das optische Warngerät (12) weiterhin ein Warnschild beinhaltet eine Mehrzahl an LEDs (22) in Form eines Kreises (23) und eines Schrägstrichs, welcher den Kreis (23) überkreuzt beinhaltet.

5. System (10) nach Anspruch 4, wobei die LEDs (22), welche dem Warnschild zugeordnet sind, ausgebildet sind um unabhängig von den dem Fahrrad (25, 26) zugeordneten LEDs (22) erleuchtet zu werden.

6. System (10) nach Anspruch 5, wobei LEDs (22), welche Reifen (25) des Fahrrads zugeordnet sind, ausgebildet sind unabhängig von den dem Rahmen (26) zugeordneten LEDs erleuchtet zu werden.

7. System (10) nach einem der vorangegangenen Ansprüche, wobei der Controller (11) einen Geräuschwarnmelder für einen Fahrzeugführer beinhaltet.

8. Lastkraftwagen (40) in welchen das Radfahrerwarnsystem (10) nach einem der vorangegangenen Ansprüche integriert ist.

## Revendications

1. Système avertisseur de cycliste (10) pour le côté gauche d'un poids lourd (40) comprenant un contrôleur (11) pour la cabine de véhicule et un ou plusieurs dispositifs avertisseurs (12, 13) réagissant au contrôleur (11) pour générer un signal d'avertissement visuel et/ou optique du côté gauche du véhicule (40), le contrôleur (11) étant automatiquement déclenché par l'activation du clignotant du côté gauche du véhicule, système **caractérisé en ce qu'**il comprend en outre :
- un ensemble de capteurs de proximité (34, 35, 36) le long du côté gauche du véhicule, pour détecter un cycle sur le côté gauche du véhicule (40), l'ensemble des capteurs de proximité (34, 35, 36) communiquant avec le contrôleur (11), différenciant les signaux (31, 32, 33) provenant de capteurs de proximité (34, 35, 36) pour :
* détecter le mouvement d'un cycle par rapport au véhicule (40) équipé des capteurs (34, 35, 36), la différenciation utilisant le mouvement relatif du cycle vers l'avant en détectant des entrées successives du capteur le plus en arrière (36) jusqu'au capteur le plus en avant (34) de l'ensemble de capteurs de proximité (34, 35, 36), et
* éliminer les objets fixes en appliquant un seuil de vitesse relative, et
- un capteur GPS pour fournir des informations sur la position et la vitesse du poids lourd (40), et
- une interdiction au-dessus d'une vitesse routière minimale du véhicule (40), cette vitesse étant réglable en fonction des informations de localisation du capteur GPS.

2. Système (10) selon la revendication 1,
dans lequel
les dispositifs d'avertisseurs visuels et sonores (12, 13) sont combinés dans un boîtier commun.

3. Système (10) selon la revendication 1 ou la revendication 2,
dans lequel
le dispositif avertisseur visuel (12) est circulaire et comprend un ensemble de diodes LED (22) formant un cycle (25, 26), les diodes LED (22) s'allumant lors du déclenchement du contrôleur (11).

4. Système (10) selon la revendication 3,
dans lequel
le dispositif avertisseur visuel (12) comprend en outre un signe d'avertissement avec un ensemble de diodes LED (22) en forme de cercle (23) et d'une barre oblique (24) traversant le cercle (23).

5. Système (10) selon la revendication 4,
dans lequel
les diodes LED (22) associées au signe d'avertissement sont éclairées indépendamment des diodes LED (22) associées au cycle (25, 26).

6. Système (10) selon la revendication 5,
dans lequel
les diodes LED associées aux roues (25) du cycle sont éclairées indépendant des diodes LED associées au cadre (26) du cycle.

7. Système (10) selon la revendication précédente,
dans lequel
le contrôleur (11) comprend un avertisseur sonore (37) pour le conducteur de véhicule.

8. Poids lourd (40) équipé d'un système avertisseur de cyclistes (10) selon l'une quelconque des revendications précédentes.
